# EUROPEAN PATENT SPECIFICATION

(11) **EP 1 559 815 B1**
(45) Date of publication and mention of the grant of the patent: **25.06.2008**
(21) Application number: 04030556.7
(22) Date of filing: 23.12.2004
(51) Int. Cl.: D02G 3/44, D02G 3/40, D01F 8/04

(54) **Conductive yarn, method of manufacture and use thereof**
Elektrisch leitfähiges Garn sowie Verfahren zur Herstellung und Verwendung desselben
Fil conducteur, méthode pour sa fabrication et son utilisation

(30) Priority: 29.01.2004 US 767668
(43) Date of publication of application: 03.08.2005
(73) Proprietor: Teijin Monofilament Germany GmbH, 86399 Bobingen (DE)
(72) Inventor: Crawford, Julian S., Spartanburg SC 29306 (GB); Traetz, Frederico, 03122-010, Sao Paulo, SP (BR)
(74) Representative: Ackermann, Joachim

(56) References cited:
- FR-A- 2 466 517
- US-A- 3 969 559
- US-A- 4 045 949

## Description

The instant invention relates to a conductive yarn and to its manufacture. The conductive yarn can be used in different fields of industry, preferably for the manufacture of sieves and sieve assemblies.

### Definition of Terms

In this disclosure the following terms shall have the following meaning:

Filament - a shaped body, usually formed of polymeric material, of relatively small cross section and of indefinite length.

Yarn: A product formed of at least one filament (=monofilament) or an assembly of filaments (=multifilament) or staple fibres formed from said monofilaments or multifilaments

Multi-Component Yarn: A yarn comprising at least one additional material and/or two or more different yarns or staple fibres formed from said multi-component yarn.

Conductivity: The property or capability of the yarn to conduct electricity. Typical conductivities are resistivities of the yarn of less than 1*10⁶ ohms/cm or in the alternative conductivities of the yarn of more than 1*10⁻⁶ (Siemens/cm). Preferred yarns of this invention possess resistivities of less than than 1*10⁴ ohms/cm.

### Background of the Invention

It has long been known to produce conductive yarns from thermoplastic polymers which are combined with an electrically conductive material such as carbon. In many instances the carbon is combined with the yarn as a coating. This is not wholly acceptable because carbon or carbon loaded polymeric resin does not adhere well which causes flaking or peeling. Another concern is the mass of carbon required in order to generate an acceptable level of electrical conductivity. Because relatively large percentages of carbon must be combined with the polymer resin to make it electrically conductive, the yarn properties are severely compromised. Historically, the carbon content necessary to provide adequate electrical conductivity is more than 25% by weight. The technical properties of yarns containing this level of carbon content are severely affected.

Carbon nanotubes, which have recently been developed, are essentially very fine carbon fibers. This nano size allows the use of a low percentage of carbon in a polymeric composition while providing for the requisite conductive properties.

Carbon nanotubes are disclosed, for example, in US-A-6,099,960; US-A-6,280,697; US-A-2002/172,639; US-A-2003/102,222; US-A-2002/113,335 and US-A-2003/102,444.

Fibers containing intrinsically electrically conductive material or composite materials comprising carbon nanotubes are disclosed, for example, in US-A-6,228,492; US-A-6,528,572; US-A-2003/158,323; US-A-6,621,970; CN-A-1431342; US-A-2003/236,588 and US-A-5,840,425.

US-A-3,969,559 discloses a multi-component electrically conductive yarn comprising a primary component and a secondary component. The primary component comprises an elongated filament formed from polymeric material. The secondary component comprises a blend of a polymeric material and carbon which is bonded with the primary component along its length.

It is the primary object of the instant invention to provide a multicomponent yarn which is electrically conductive, does not flake, is not brittle and has good physical properties.

Another object of the invention is a multi-component electrically conductive yarn in which no component includes more than 20% carbon by weight.

Another object of the invention is a multi-component electrically conductive yarn which contains less than 10% carbon by weight.

Another object of the invention is a multi-component electrically conductive yarn which includes a plurality of components, at least one of which is a conductive filament.

Another object of the invention is the provision of a multi-component yarn with an electrically conductive sheath secured to a non-conductive core.

Another object of the invention is a multi-component electrically conductive yarn in which one component includes carbon nanotubes which form the electrical conductor.

Another object of the invention is a multi-component electrically conductive yarn in which multiple components include carbon nanotubes which form the electrical conductor.

Another object of the invention is a multi-component electrically conductive yarn which is physically resilient.

The invention is intended for use in a variety of applications including, but not limited to, lay belts, conveyor belts, braiding, industrial textiles, filtration, paper machine clothing, FIBC shipping bags, upholstery, home furnishings, hook and loop, carpets, apparel, nonwovens, brushes and process forming belts.

### Summary of the Invention

The invention is directed to a multi-component electrically conductive yarn and the method of forming. The yarn comprises a primary component and a secondary component. The primary component comprises an elongated filament formed from polymeric material. The secondary component comprises a fiber of a polymeric material and carbon nanotubes which is bonded with the primary component along its length. The carbon included in the secondary component includes up to 20% by mass of carbon nanotubes. The secondary component when combined with the first component provides an electrically conductive yarn which comprises no more than 10% carbon nanotubes by weight.

The polymeric material forming the primary component may be one of any melt-spinnable polymer, preferred is one of or a blend of polyester (such as polyethylene terephthalate ("PET"), polytrimethyleneterephthalate ("PTT"), polybutyleneterephthalate ("PBT"), (poly-cyclohexyldimethanolterephthalate) ("PCTA") and polycarbonate), polyamide, polyphenylenesulfide ("PPS"), polypropylene, polyethylene and/or polyetherketone ("PEEK or PEK"). The polymeric material of said secondary component includes at least 80% of one of polyester, polyamide, PPS, polypropylene, polyethylene and polyetherketone while carbon nanotubes comprise the remainder of the makings of the component.

The secondary component may comprise a sheath surrounding the filament of the primary component. Alternatively, the secondary component may comprise an elongated filament bonded with the filament of the primary component along its length.

The secondary component may wrap around the primary component as it extends along its length.

The secondary component may comprise between 0.5% and 50% by weight of the multi-component yarn while the carbon nanotubes may comprise up to 20% by weight, preferred no more than 15% by weight, of the secondary component.

The primary component may be a yarn which has been stretched and heat set prior to being combined with the secondary component. Alternatively, the first and second components may be extruded simultaneously and joined forming the multicomponent yarn. The so formed yarn may then be stretched and heat set. Such a yarn is called a heterofilament yarn.

The invention further includes a method of forming a conductive multicomponent yam. The method includes the steps of providing at least a first component comprising at least one elongated filament of polymeric material. Also, providing at least a second component comprising a composition including a polymeric resin and carbon nanotubes. Limiting the carbon nanotubes to between 0.5% to 20% of the composition of the second component. Passing the first component through a crosshead extruder in the form of a filament while the second component is extruded onto the first component causing it to bond therewith forming the composite yarn as a core filament comprised of the first component with a conductive sheath formed there about. This type of yarn is called a coated yarn. Alternately, the method may comprise simultaneously extruding the first and second components forming multiple filaments and causing the filaments to bond together along their length. This type of yarn is called bonded filaments.

### Description of the Drawings

The construction designed to carry out the Invention will hereinafter be described, together with other features thereof.

The Invention will be more readily understood from a reading of the following specification and by reference to the accompanying drawings forming a part thereof, wherein an example of the invention is shown and wherein:
Figure 1 is a schematic view showing a process forming a multicomponent yarn of the invention. It is the coating process of the first component with a second component by a crosshead extruder.
Figure 2 is a schematic view showing another process for formeng a multicomponent yarn of the invention.
Figure 3A is a cross sectional view of a multi-component yarn of the invention.
Figure 3B is a cross sectional view of another multi-component yarn of the invention.
Figure 3C is a cross sectional view of another multi-component yarn of the invention.
Figure 3D is a cross sectional view of another multi-component yarn of the invention.
Figure 3E is a cross-sectional view of another multi-component yarn of the invention.
Figure 3F is a cross-sectional view of another multi-component yarn of the invention.
Figure 3G is a cross-sectional view of another multi-component yam of the invention.
Figure 4 is a diagrammatic view showing aligned nanotubes.

### Description of a Preferred Embodiment

Referring now in more detail to the drawings, the invention will now be described in more detail.

Carbon nanotubes are extremely small electrically conductive elements which have found use with polymers as an electrically conductive additive. A primary advantage of carbon nanotubes is that they possess a higher aspect ratio than carbon black particles or chopped carbon which allows for a lower additive loading while maintaining adequate levels of electrical conductivity.

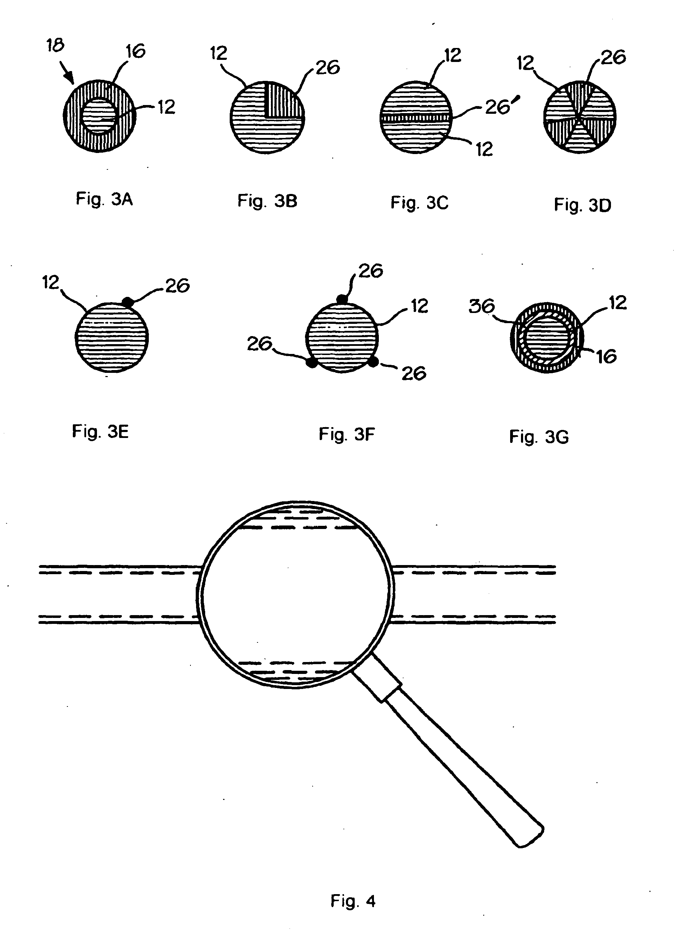

Carbon nanotubes comprise elongated particles which tend to intertwine and have a low sensitivity to shear fields. This provides the capability of elongating the polymeric resin containing carbon nanotubes without entirely severing the carbon nanotube agglomerates which are formed within the polymer. Figure 4 schematically shows generally the manner in which carbon nanotubes can be distributed in a polymeric resin.

In an electrically conductive yarn it has been most difficult to produce a yarn which retains most of the desired fiber characteristics normally achieved from the original polymer resin due to the negative impact of the carbon. A major contributor to this problem is the amount of carbon necessary to provide for the fiber to be sufficiently conductive. If the carbon additive is combined with the polymer in the form of a coating, the coating has the tendency to peel and crack.

The instant invention provides to overcome these drawbacks by providing an electrically conductive multi-component yarn which retains the desired physical characteristics, is flexible and does not peel or crack.

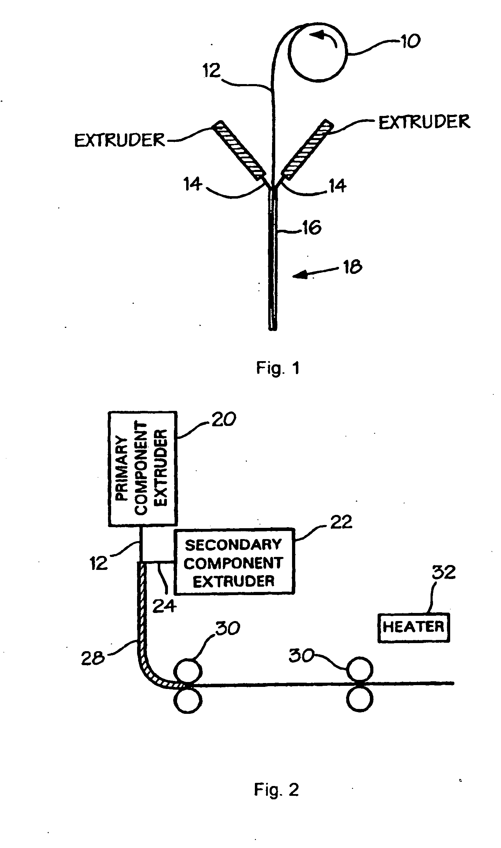

Turning now to Fig 1, a supply (10) comprising a set filament (12) is seen being passed through at least one but preferably a plurality of extruder dies which extrude a coating or adhering resin compound (14) onto the filament (12) as it passes. Resin compound (14), in this instance, forms a sheath (16) about filament (12). Also, in this instance, as filament (12) is already stretched and heat set, sheath (16) is allowed to solidify and the multi-component yarn (18) is simply rewound for shipment. Alternatively, the multi-component yarn could be passed between draw rolls and through an oven where the yarn is stretched, relaxed, or both and then heat set.

The multi-component yarn (18) may comprise a core usually formed of a polyester (such as PET, PTT, PBT, PCTA) or a polyamide fiber. The core could alternatively be polypropylene, polyethylene, PPS, PEEK or other melt-spinnable polymers or a blend of these polymers. The core may comprise one or a plurality of filaments. It can also be a yarn made of natural fibers and staple fibers.

The sheath comprises a polymer, again usually a polyester or a polyamide combined with carbon nanotubes. Again, the above listed resins could also comprise the polymer forming the sheath.

Resin compound (14) comprises between 0.5% to 20% carbon nanotubes and between 80% to 99.5% polyester or other polymer or blend of polymers. Sheath (16) comprises between 0.5% to 50% of the mass of the multi-component yarn while core (12) forms between 50% to 99.5% of the multi-component yarn.

The multi-component yarns of this invention can contain - besides the ingredients defined above - in the first component and/or in the second component additional adjuvants commonly used in yarns. Examples thereof are stabilization agents against hydrolysis, processing aids, antioxidants, softening agents, lubricants, pigments, matting agents, viscosity modifiers or nucleation agents.

Examples of stabilization agents against hydrolysis are carbodiimides, epoxy compounds or ethylene carbonate.

Examples of processing agents are siloxanes, waxes or long-chain carboxylic acids or their salts, aliphatic or aromatic esters or ethers.

Examples of antioxidants are phosphorous compounds, such as esters of phosphoric acid or sterically hindered phenols.

Examples of pigments or matting agents are organic dye-pigments or titanium dioxide.

Examples for viscosity modification agents are polyvalent carboxylic acids, their esters or polyvalent alcohols.

The nanotubes within resin (14) are interspersed along the length of the sheath and about the core providing an electrically conductive artery along the length of the multicomponent yarn. The percentage of the multi-component yarn comprising carbon nanotubes is between 0.5% and 15%. Such a low percentage of carbon allows the resins forming the compound (14) to maintain substantially all of their normal features such as elasticity, strength and elongation. Normally the core of the multi-component yarn retains all of its usual characteristics as it is formed of 100% polymer.

In a second arrangement for forming the multi-component yarn, yarn (12) is preformed but not set. Yarn (12) is drawn from supply (10) and passes through the extruders extruding compound (14) producing yarn (18) as earlier described. In the alternative arrangement, the just formed multi-component yarn is passed between draw rolls and through an oven where the yarn is stretched, relaxed, or both and then heat set. Both the core (12) and sheath (16) are treated and then set. This is possible due to the innate characteristics of carbon nanotubes which are not so easily separated but remain substantially in contact and because of the limited percentage of nanotubes present in the sheath (16).

Other arrangements are shown in Fig 2. In a first arrangement a pair of extruders (20, 22) are shown. Extruder (20) extrudes the core yarn (12) while extruder (22) extrudes the second component (24). The extruders are controlled in known manner which allows the second component (24) to adhere to core (12) along its length in the form of an elongated filament (28). Figure 2 also represents the heterofilament process. In this case both components are molten in their extruders (20) and (22) and pressed into a special designed spinhead in which both components are simultaneously spun into a multi-component yarn (28).

The multi-component yarn (28) shown in Fig 3 is passed between draw rolls (30), stretched and/or relaxed and then heat set by heater (32).

It is noted that component (24) may be dispensed in the form of sheath (16) as shown in Fig 3A which encases the core along its length. The extruded compound (24) can be controlled to attach to the core (12) in the form of a wedge shaped filament (26) or an additional filament (26) which extends along the length and is wrapped about its axis of core (12) as shown in Figs 3B and 3E. Another arrangement could be for core (12) to be arranged an opposed sides of compound (24) which assumes the form of a conductive strip (26') which extends along the length of core (12) as shown in Fig 3C. The extruded compound (24) could form a plurality of wedge shaped filaments (26) or additional filaments (26) which are arranged along the length of core (12) as shown in Figs 3D and 3F. Another arrangement could be for core (12) to be first coated by sheath (36) and then by conductive sheath (16). Sheath (36), which is preferably a low melt polymer, adhesive type polymer, co-polyester or other suitable material, provides an intermediate layer which provides increased adhesion between the core (12) and the conductive sheath (16). In each of the arrangements sheath (16), filaments (26) and strips (26') form a conductive filament which is adhered with core (12) along Its length.

In all arrangements, the percentage of the first component or core polymer and the percentage of the second component or conductive polymer + carbon nanotubes remains within the set forth limits.

It is noted that the core could comprise a plurality of filaments which are preferably but not necessarily of the same polymer. The core could comprise a blend of polymers. Also the sheath or conductive filament could comprise a blend of polymers combined with the carbon nanotubes.

The multi-component conductive yarn of the invention is intended for use with a multiple of fabric types such as woven fabrics, knitted fabrics, braided fabrics, nonwoven fabrics, interlaid fabrics and composite fabrics. The yarn is intended to comprise varying selected percents of yams forming these fabrics. Also, the yarn is intended for use with any combination of the above fabric types.

While a preferred embodiment of the invention has been described using specific terms, such description is for illustrative purposes only, and it is to be understood that changes and variations may be made without departing from the spirit or scope of the following claims.

The multi-component electrically conductive yarns of this invention can be used in all fields of industry, preferably in belts, in textiles for industrial and home applications, in sieves, especially for paper machines or for filtration use, in shipping bags, in nonwovens, or in brushes.

The invention relates also to these uses of the multi-component electrically conductive yarns.

The examples which follow illustrate the invention without limiting it.

Manufacture of core-sheath fibers comprising a PET core and a sheath of PET and carbon nanotubes.

Stretched and heat set PET monofilaments are used as starting material and are processed in a coating apparatus consisting of an extruder and an annular die. The starting PET monofilaments are drawn with a speed of about 500 m/min through the annular die and are coated with a composition consisting of PET and carbon nanotubes. The PET monofilaments were passed through the extruder die and the composition consisting of PET and carbon nanotubes were extruding onto said PET monofilaments forming an electrically conductive sheath along said PET monofilament. After the coating process the coated monofilament was drawn through a water bath and was wound onto a bobbin.

The composition of the obtained monofilaments and their properties are given in the following table.

| Example | core diameter (mm)¹⁾ | yarn diameter (mm)¹⁾ | yarn denier (dtex)²⁾ | shrinkage (%)³⁾ | breaking force (kg)⁴⁾ | elongation at break (%)⁵⁾ | tenacity (cN/tex)⁶⁾ | resisitvity (ohms/cm)⁷⁾ |
|---|---|---|---|---|---|---|---|---|
| 1 | 0.41 | 0.44 | 2116 | 11.3 | 6.71 | 30.6 | 3.5 | 8*10³ |
| 2 | 0.49 | 0.51 | 2847 | 8.5 | 11.13 | 32.7 | 4.3 | 9*10³ |
| 3 | 0.49 | 0.53 | 3023 | 12.8 | 11.17 | 29.7 | 4.1 | 4*10³ |
| 6 | 0.49 | 0.53 | 3055 | 10.3 | 10.35 | 30.3 | 3.6 | 5*10⁴ |
| 5 | 0.49 | 0.53 | n.d. | n.d. | n.d. | n.d. | n.d. | 4*10⁴ |
| 6 | 0.49 | 0.51 | 2873 | 17 | 10.04 | 17.9 | 3.9 | 4*10⁴ |

| | | | | | | | | |
|---|---|---|---|---|---|---|---|---|
| ¹⁾ yarn diameter determined by microscope in transversal cuts | | | | | | | | |
| ²⁾ yarn denier determined by the average of 40 strands, each of 1000 mm length | | | | | | | | |
| ³⁾ shrinkage after heat treatment in an air-forced oven of 200°C for 30 minutes, no pre-tension | | | | | | | | |
| ⁴⁾ breaking force determined in a Zwick 1445 with monofilaments of 500 mm in length, clamp speed 500 mm/mind, mean of 10 measurements | | | | | | | | |
| ⁵⁾ elongation at break determined in a Zwick 1445 with monofilaments of 500 mm in length, clamp speed 500 mm/mind, mean of 10 measurements | | | | | | | | |
| ⁶⁾ tenacity calculated by breaking strength divided by yarn denier | | | | | | | | |
| ⁷⁾ resistivity measured by two contacts in 100 mm distance, electrical tension 100 Volts | | | | | | | | |

## Claims

1. A multi-component electrically conductive yarn comprising a primary component and a secondary component:
said primary component comprising at least one elongated filament formed of polymeric material;
said secondary component comprising a blend of polymeric material and carbon bonded with said primary component along its length; **characterized in that**,
said carbon material of said secondary component comprises carbon nanotubes which constitute up to 20% by weight of said secondary component; wherein, said electrically conductive yarn comprises no more than 10% by weight carbon nanotubes.

2. The yarn of claim 1 wherein said polymeric material of said primary component is formed of at least one of polyester, polyamide, polypropylene, polyethylene, polyphenylene sulphide and polyetherketone.

3. The yarn of claim 1 wherein said polymeric material of said secondary component includes at least 80% of at least one of polyester, polyamide, polypropylene, polyethylene, polyphenylene sulphide and polyetherketone.

4. The yarn of claim 1 wherein said secondary component comprises a sheath bonded with and surrounding said filament of said primary component.

5. The yarn of claim 1 wherein said secondary component comprises an elongated filament bonded with said filament of said primary component along its length.

6. The yarn of claim 1 wherein said secondary component comprises between 0.5% by weight and 50% by weight of said multi-component yarn.

7. The yarn of claim 1 wherein said primary component is heat set prior to bonding with said secondary component.

8. The yarn of claim 1 wherein said multi-component yarn is heat set.

9. The yarn of claim 1 wherein said primary component comprises a plurality of elongated filaments of synthetic material.

10. The yarn of claim 9 wherein at least two of said plurality of filaments are formed of different polymers.

11. The yarn of claim 9 wherein said filaments are heat set prior to bonding with said secondary components.

12. A method of forming an electrically conductive multi-component yarn including:
i) providing a first component comprising at least one elongated filament of synthetic material and setting said filament;
ii) providing a second component comprising a composition including polymeric resin and carbon nanotubes and further providing that the carbon nanotubes comprise between 0.1 % by weight to 20% by weight of the composition,
iii) passing said first component through an extruder die and extruding said second component onto said first component forming an electrically conductive filament along said first component; and,
iv) cooling said multi-component yarn.

13. The method of claim 12 including heat setting said elongated filament of said first component prior to passing said first component through said extruder.

14. A method of forming a multi-component electrically conductive yarn including the steps:
v) providing a first component comprising at least one resin of polymeric resin;
vi) providing a second component including a composition including a polymeric resin and carbon nanotubes with the carbon nanotubes comprising between 0.1 % by weight to 20% by weight of the composition;
vii) providing two extruders and extruding simultaneously said first and second components forming said first and second filaments;
viii)causing said first and second filaments to bond along their length forming an electrically conductive multi-component yarn;
ix) optionally stretching said electrically conductive multi-component yarn; and
x) optionally heat setting said electrically conductive multi-component yarn.

15. The method of claim 14 wherein said stretching and said heat setting includes passing said bonded first and second filaments between at least two pairs of draw rolls and at least a heater causing said multicomponent yarn to be stretched and heat set.

16. Use of an multi-component electrically conductive yarn according to claim 1 in belts, in textiles for industrial and home applications, in sieves, in shipping bags, in nonwovens or in brushes.

17. The use of claim 16, wherein the multi-component electrically conductive yarn is used in paper machines or in filtration applications.

## Patentansprüche

1. Mehrkomponentiges, elektrisch leitfähiges Garn mit einer primären Komponente und einer sekundären Komponente, bei dem die primäre Komponente mindestens ein längliches Filament aus polymerem Material umfaßt,
die sekundäre Komponente eine Mischung von polymerem Material und Carbon, verbunden mit der primären Komponente entlang ihrer Länge, umfaßt,
**dadurch gekennzeichnet, daß**
das Carbonmaterial der sekundären Komponente Nano-Carbonröhrchen umfaßt, die bis zu 20 Gew.-% der sekundären Komponente ausmachen, wobei das elektrisch leitfähige Garn höchstens 10 Gew.-% Nano-Carbonröhrchen enthält.

2. Garn nach Anspruch 1, bei dem das polymere Material der primären Komponente aus mindestens einem Mitglied der Reihe Polyester, Polyamid, Polypropylen, Polyethylen, Polyphenylensulfid und Polyetherketon gebildet ist.

3. Garn nach Anspruch 1, bei dem das polymere Material der sekundären Komponente mindestens 80% mindestens eines Mitglieds der Reihe Polyester, Polyamid, Polypropylen, Polyethylen, Polyphenylensulfid und Polyetherketon enthält.

4. Garn nach Anspruch 1, bei dem die sekundäre Komponente einen mit dem Filament aus der primären Komponente verbundenen und dieses umgebenden Mantel umfaßt.

5. Garn nach Anspruch 1, bei dem die sekundäre Komponente ein mit dem Filament aus der primären Komponente entlang dessen Länge verbundenes längliches Filament umfaßt.

6. Garn nach Anspruch 1, bei dem die sekundäre Komponente zwischen 0,5 Gew.-% und 50 Gew.-% des Mehrkomponentengarns ausmacht.

7. Garn nach Anspruch 1, bei dem die primäre Komponente vor dem Verbinden mit der sekundären Komponente thermofixiert wurde.

8. Garn nach Anspruch 1, bei dem das Mehrkomponentengarn thermofixiert ist.

9. Garn nach Anspruch 1, bei dem die primäre Komponente mehrere längliche Filamente aus synthetischem Material umfaßt.

10. Garn nach Anspruch 9, bei dem mindestens zwei der mehreren Filamente aus unterschiedlichen Polymeren gebildet sind.

11. Garn nach Anspruch 9, bei dem die Filamente vor dem Verbinden mit den sekundären Komponenten thermofixiert wurden.

12. Verfahren zur Herstellung eines elektrisch leitfähigen Mehrkomponentengarns, bei dem man
i) eine erste Komponente, umfassend mindestens ein längliches Filament aus synthetischem Material, bereitstellt und das Filament fixiert,
ii) eine zweite Komponente, umfassend eine polymeres Harz und Nano-Carbonröhrchen enthaltende Zusammensetzung, bereitstellt und dabei die Nano-Carbonröhrchen auf einen Gehalt zwischen 0,1 Gew.-% bis 20 Gew.-% der Zusammensetzung begrenzt,
iii) die erste Komponente durch eine Exdruderdüse führt und dabei die zweite Komponente auf die erste Komponente extrudiert und entlang der ersten Komponente ein elektrisch leitfähiges Filament ausbildet und
iv) das Mehrkomponentengarn abkühlt.

13. Verfahren nach Anspruch 12, bei dem man das längliche Filament aus der ersten Komponente vor der Passage der ersten Komponente durch den Extruder thermofixiert.

14. Verfahren zur Herstellung eines mehrkomponentigen, elektrisch leitfähigen Garns, bei dem man
v) eine erste Komponente, umfassend mindestens ein Harz aus polymerem Harz, bereitstellt,
vi) eine zweite Komponente, enthaltend eine Zusammensetzung, enthaltend ein polymeres Harz und Nano-Carbonröhrchen mit einem Anteil der Nano-Carbonröhrchen zwischen 0,1 Gew.-% bis 20 Gew.-% der Zusammensetzung, bereitstellt,
vii) zwei Extruder bereitstellt und die erste und zweite Komponente gleichzeitig zu ersten und zweiten Filamenten extrudiert,
viii)die ersten und zweiten Filamente entlang ihrer Länge zum Haften bringt und so ein elektrisch leitfähiges Mehrkomponentengarn bildet,
ix) gegebenenfalls das elektrisch leitfähige Mehrkomponentengarn verstreckt und
x) gegebenenfalls das elektrisch leitfähige Mehrkomponentengarn thermofixiert.

15. Verfahren nach Anspruch 14, bei dem man zum Verstrecken und Thermofixieren die miteinander verbundenen ersten und zweiten Filamente zwischen mindestens zwei Streckwerken und mindestens einer Heizvorrichtung leitet und so das Mehrkomponentengarn verstreckt und thermofixiert.

16. Verwendung eines mehrkomponentigen, elektrisch leitfähigen Garns gemäß Anspruch 1 in Bändern, in Textilien für Gewerbe und Haushalt, in Sieben, in Schüttgutsäcken, in Vliesstoffen oder in Bürsten und Pinseln.

17. Verwendung nach Anspruch 16, bei der man das mehrkomponentige, elektrisch leitfähige Garn in Papiermaschinen oder in Filtrationen einsetzt.

## Revendications

1. Fil électriquement conducteur à plusieurs composants comprenant un composant primaire et un composant secondaire ;
ledit composant primaire comprenant au moins un filament allongé formé de matériau polymère ;
ledit composant secondaire comprenant un mélange de matériau polymère et de carbone lié audit composant primaire le long de sa longueur ;
**caractérisé en ce que** ledit matériau carboné dudit composant secondaire comprend des nanotubes de carbone qui représentent jusqu'à 20 % en poids dudit composant secondaire ; lequel fil électriquement conducteur ne comprenant pas plus de 10 % en poids de nanotubes de carbone.

2. Fil selon la revendication 1, dans lequel ledit matériau polymère dudit composant primaire est formé d'au moins l'un parmi le polyester, le polyamide, le polypropylène, le polyéthylène, le poly(sulfure de phénylène) et la polyéthercétone.

3. Fil selon la revendication 1, dans lequel ledit matériau polymère dudit composant secondaire contient au moins 80 % d'au moins l'un parmi le polyester, le polyamide, le polypropylène, le polyéthylène, le poly(sulfure de phénylène) et la polyéthercétone.

4. Fil selon la revendication 1, dans lequel ledit composant secondaire comprend une gaine liée à et entourant ledit filament dudit composant primaire.

5. Fil selon la revendication 1, dans lequel ledit composant secondaire comprend un filament allongé lié audit filament dudit composant primaire le long de sa longueur.

6. Fil selon la revendication 1, dans lequel ledit composant secondaire représente entre 0,5 % en poids et 50 % en poids dudit fil à plusieurs composants.

7. Fil selon la revendication 1, dans lequel ledit composant primaire est thermodurci avant liaison audit composant secondaire.

8. Fil selon la revendication 1, dans lequel ledit fil à plusieurs composants est thermodurci.

9. Fil selon la revendication 1, dans lequel ledit composant primaire comprend une pluralité de filaments allongés en matériau synthétique.

10. Fil selon la revendication 9, dans lequel au moins deux de ladite pluralité de filaments sont formés de polymères différents.

11. Fil selon la revendication 9, dans lequel lesdits filaments sont thermodurcis avant liaison auxdits composants secondaires.

12. Procédé pour former un fil à plusieurs composants électriquement conducteur, consistant à :
i) disposer d'un premier composant comprenant au moins un filament allongé en matériau synthétique et placer ledit filament ;
ii) disposer d'un deuxième composant comprenant une composition contenant une résine polymère et des nanotubes de carbone et sous réserve en outre que les nanotubes de carbone représentent entre 0,1 % en poids et 20 % en poids de la composition,
iii) faire passer ledit premier composant à travers la filière d'une extrudeuse et extruder ledit deuxième composant sur ledit premier composant en formant un filament électriquement conducteur le long dudit premier composant ; et
iv) refroidir ledit fil à plusieurs composants.

13. Procédé selon la revendication 12, comprenant le durcissement thermique dudit filament allongé dudit premier composant avant passage dudit premier composant à travers ladite extrudeuse.

14. Procédé pour former un fil électriquement conducteur à plusieurs composants, comprenant les étapes consistant à :
v) disposer d'un premier composant comprenant au moins une résine polymère ;
vi) disposer d'un deuxième composant comprenant une composition contenant une résine polymère et des nanotubes de carbone, les nanotubes de carbone représentant entre 0,1 % en poids et 20 % en poids de la composition ;
vii) disposer de deux extrudeuses et extruder simultanément lesdits premier et deuxième composants, en formant lesdits premier et deuxième filaments ;
viii) faire en sorte que lesdits premier et deuxième filaments se lient le long de leur longueur en formant un fil à plusieurs composants électriquement conducteur ;
ix) éventuellement étirer ledit fil à plusieurs composants électriquement conducteur ; et
x) éventuellement thermodurcir ledit fil à plusieurs composants électriquement conducteur.

15. Procédé selon la revendication 14, dans lequel ledit étirage et ledit durcissement thermique comprennent l'opération consistant à faire passer lesdits premier et deuxième filaments liés entre au moins deux paires de rouleaux d'étirage et au moins un réchauffeur, provoquant l'étirement et le durcissement thermique dudit fil à plusieurs composants.

16. Utilisation d'un fil électriquement conducteur à composants multiples selon la revendication 1 dans des courroies, dans des textiles pour applications industrielles et domestiques, dans des tamis, dans des sacs d'expédition, dans des non-tissés ou dans des brosses.

17. Utilisation selon la revendication 16, dans laquelle le fil électriquement conducteur à composants multiples est utilisé dans des machines à papier ou dans des applications de filtration.
